# EUROPEAN PATENT SPECIFICATION

(11) **EP 2 091 207 B1**
(45) Date of publication and mention of the grant of the patent: **17.12.2014**
(21) Application number: 08161779.7
(22) Date of filing: 05.08.2008
(51) Int. Cl.: H04L 29/08, H04L 29/06

(54) **Adaptive multimedia system for providing multimedia contents and codec to user terminal and method thereof**
Adaptives Multimediasystem zur Bereitstellung von Multimediainhalten und Codes an ein Benutzerendgerät und entsprechendes Verfahren
Système multimédia adaptatif pour fournir des contenus multimédia et codec pour terminal d'utilisateur et procédé associé

(30) Priority: 12.12.2007 KR 20070128923
(43) Date of publication of application: 19.08.2009
(73) Proprietor: Electronics and Telecommunications Research Institute, Daejon 305-350 (KR)
(72) Inventor: Kim, Wontae, 336-861, Chungchungnam-do (KR); Kim, Dohyung, 305-755, Daejeon (KR); Lee, Hwangu, 302-742, Daejeon (KR); Kwak, Jiyoung, 506-308, Kwangju-si (KR); Lee, Kyunghee, 305-751, Daejeon (KR); Park, Seungmin, 305-755, Daejeon (KR)
(74) Representative: Betten & Resch

(56) References cited:
- WO-A-2004/064353
- WO-A-2007/066897

## Description

### BACKGROUND OF THE INVENTION

### 1. Field of the Invention

The present invention relates to an adaptive multimedia system and a method thereof, and in particular, to an adaptive multimedia system for providing multimedia contents and a codec to a user terminal, and to a method thereof.

This work was supported by the IT R&D program of MIC/IITA [2006-S-038-02, Development of Device-Adaptive Embedded Operating System for Mobile Convergence Computing].

### 2. Description of the Related Art

Generally, Internet broadcast media streaming techniques encode multimedia data captured from a camcorder in real time, and transmits multimedia streams compressed by a codec, which runs on the UDP/IP and RTP/RTCP layers of a media server, to a media player of a terminal through a wireless/wired Internet network under the control of the RTSP (Real Time Streaming Protocol).

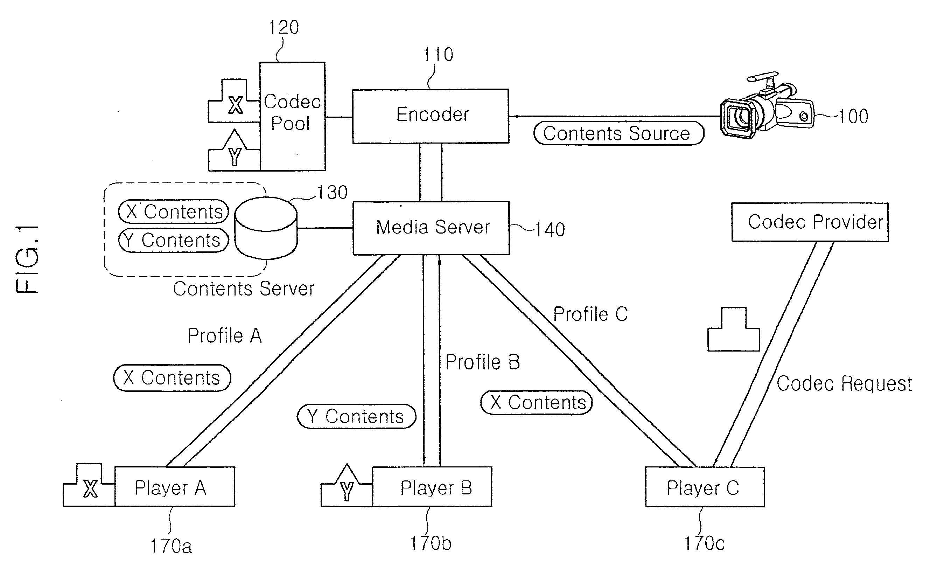

FIG. 1 is a diagram showing the configuration of a known multimedia streaming system that includes an encoder and a media server.

The known multimedia streaming system includes a video camera 100 that captures raw video and raw audio, an encoder 110 that has a codec pool 120, such as an X codec (MPEG 1/2/4/7) and a Y codec (H.264), and compresses and encodes the video captured by the video camera 100, a contents server 130 that stores the captured A/V multimedia contents (X contents and Y contents), a media server 140 that transmits live multimedia streams encoded in real time or previously stored on-demand multimedia streams to a media player of a user terminal through a network, and players 170a, 170b, and 170c that have a codec for decoding the A/V media contents.

In the known multimedia streaming system, a service provider who produces or distributes multimedia contents produces multimedia contents in a limited number of formats according to the types of codecs, that is, the encoders, and provides the multimedia contents through Internet or a download channel of a mobile communication network.

However, when the user terminal does not have a specific codec for executing a multimedia source produced by the service provider, the user cannot execute the multimedia source. Then, the user terminal needs to search and download the corresponding decoder over Internet, or needs to access a codec download site described in the multimedia source and automatically download a codec for decoding the multimedia source.

When the codec is downloaded manually or automatically from the codec download site, a failure frequently occurs. Accordingly, it is not preferable to download a codec manually or automatically. Particularly, in regards to the computing environment of the user terminal, various kinds of hardware and software platforms including operating systems for the mobile-based ubiquitous computing environment appears, such that the user selection diversity is maximized. When a specific operating system is generally used in the computing environment, multimedia contents can be usually executed on a system that has the corresponding operating system and codec. As described above, however, in the near future in which mobile communication-based ubiquitous computing is regularized, a specific operating system of the user terminal and its service environment are expected to have no dominant affect on the user computing environment.

In various platforms for ubiquitous computing, a contents service provider has been producing and distributing a multimedia source from the media server, without considering the environment of the user terminal and the media player. Accordingly, a probability that the user terminal fails to download the codec for decoding the multimedia contents becomes higher.

In the ubiquitous computing environment in which various terminals and HW/SW features are provided, there is a limitation to smoothly execute a multimedia source using the existing methods.

When distributing the contents, the service provider produces or distributes the multimedia contents without considering the execution environment of the multimedia player in the user terminal. Then, the service provider compresses and encodes the multimedia contents according to his/her environment and transmits the compressed and encoded multimedia contents to the user terminal through Internet or a transmission channel of a mobile network. Accordingly, the user terminal needs to separately download a codec for decoding the downloaded multimedia contents so as to execute multimedia. When the media player of the user terminal does not have the decoding codec, the media player cannot execute the multimedia contents itself.

WO 2007/066897 A1 discloses a method for correcting a codec setup error in a mobile communication terminal and a mobile communication terminal for correcting a codec setup error by analyzing voice slot data received from a mobile communication network and identifying a codec used to encode sound source data inserted into a data field of the voice slot data to confirm whether or not the mobile communication terminal and the mobile communication network have an identical codec.

WO 2004/064353 A1 discloses a method and an apparatus for controlling the codec selection in a server of a telecommunication system.

### SUMMARY OF THE INVENTION

The invention has been finalized in order to solve the above-described problems, and it is an object of the invention to provide an adaptive multimedia system for providing multimedia contents and a codec to a user terminal, which receives profile information from an open codec player of the user terminal and when a codec for decoding the multimedia contents does not exist in the user terminal, transmits the multimedia contents and the decoding codec from a media server controller and a transmission frame generator to the open codec player of the user terminal, and a method thereof.

According to an aspect of the invention, there is provided an adaptive multimedia system for providing multimedia contents and a codec to a user terminal. The adaptive multimedia system includes: a media server controller that receives profile information from an open codec player of the user terminal, and when a codec for decoding the multimedia contents does not exist in the user terminal, transmits a control message to allow the multimedia contents and the decoding codec to be transmitted together; and at least one transmission frame generator that encodes the multimedia contents through a transcoder and an encoding module according to the control message transmitted from the media server controller, generates a transmission frame including the encoded multimedia contents and the decoding codec, and transmits the generated transmission frame to the open codec player.

According to another aspect of the invention, an open codec player of a user terminal includes: a user interface unit that plays multimedia contents; a media server user interface system connection unit that receives profile information of selected multimedia contents from the user terminal; a contents profile analyzer that extracts the contents profile information and analyzes whether or not a codec corresponding to the profile information exists in the user terminal; a contents format analyzer that receives a transmission frame including multimedia contents and a decoding codec transmitted from a multimedia system, and separates the decoding codec from the multimedia contents; and a multimedia contents execution unit that parses the format of the multimedia contents transmitted from the contents format analyzer, and extracts and plays media.

The open codec player may further include a contents management agent that provides a multimedia contents analysis function and an internal codec management function.

The open codec player may further include: a codec storage that stores a codec to be used; and a codec manager that extracts a parsed codec, and performs storage, addition, and deletion of the extracted codec with respect to the codec storage.

The open codec player may further include an open codec database that stores the multimedia contents and the decoding codec transmitted from the multimedia system. In case of multimedia contents that requires a specific codec, the corresponding codec may be loaded from the open codec database and executed.

According to still another aspect of the invention, there is an adaptive multimedia providing method for a terminal not having a multimedia codec. The method includes the steps of:
(a) causing an open codec player of a user terminal to request a media server controller for selected multimedia contents; (b) receiving profile information about a codec for decoding the multimedia contents from a multimedia system and determining whether or not the decoding codec exists in the user terminal;
(c) when the decoding codec does not exist in the user terminal, transmitting profile information about the codec so as to receive the decoding codec from the media server controller, together with the selected multimedia contents; and (d) receiving a transmission frame including the requested multimedia contents and decoding codec from a transmission frame generator.

As described above, according to the aspects of the invention, when the codec for decoding multimedia contents does not exist in the media player of the user terminal, a necessary codec and multimedia contents are provided from the media server controller and the transmission frame generator to the media player of the user terminal. Therefore, according to the aspects of the invention, the open codec player can download the decoding codec to thereby execute the multimedia contents according to the computing environment of the user terminal, particularly, according to whether or not a multimedia codec exists in the terminal.

### BRIEF DESCRIPTION OF THE DRAWINGS

FIG. 1 is a diagram showing the configuration of a known multimedia system that includes an encoder and a media server;
FIG. 2 is a diagram showing the configuration of an adaptive multimedia system for a terminal not having a multimedia codec according to an embodiment of the invention;
FIG. 3 is a diagram showing the structure of a transmission frame of multimedia contents when contents is transmitted as a package according to an embodiment of the invention;
FIG. 4 is a diagram showing the configuration of an adaptive multimedia system for providing multimedia contents and a codec to a user terminal according to an embodiment of the invention;
FIG. 5 is a diagram showing the configuration of a multimedia player according to an embodiment of the invention; and
FIG. 6 is a flowchart illustrating an adaptive multimedia providing method for a terminal not having a multimedia codec according to an embodiment of the invention.

### DESCRIPTION OF THE PREFERRED EMBODIMENT

A preferred embodiment of the invention will now be described in detail with reference to the accompanying drawings.

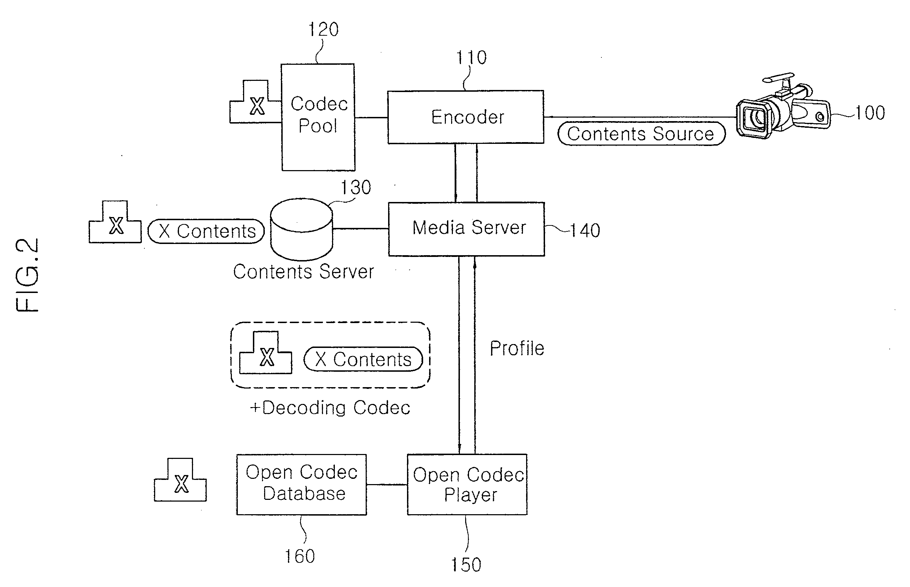

FIG. 2 is a diagram showing the configuration of an adaptive multimedia system for a terminal not having a multimedia codec according to an embodiment of the invention.

An adaptive multimedia system for a terminal not having a multimedia codec includes a video camera 100, an encoder 110 having a codec pool 120, a contents server 130, a media server 140, an open codec player 150 having an open codec database 160.

The encoder 110 provides uncompressed raw video/audio from the video camera 100 as it is, or compresses or recompresses a captured multimedia source by MPEG2, MPEG4, MPEG7, DIVX, XVID, WMV, or H.264 codec.

The multimedia source (contents source) means uncompressed raw video/audio, that is, multimedia contents that is input through a camcorder or the video camera 100.

The codec pool 120 includes various codecs, such as MPEG2, MPEG4, MPEG7, DIVX, XVID, WMV, or H. 264, such that the encoder 110 can compress or recompress the multimedia source. The codec pool 120 may have codecs of different types and sizes according to the business model of the media service provider (SP).

The contents server 130 stores the encoded multimedia contents, and transmits the multimedia contents to the media server 140.

When the multimedia contents is transmitted from the encoder 110, the media server 140 transmits the received multimedia contents to the contents server 130. Simultaneously, the media server 140 also transmits the multimedia contents to the open codec player 150 of the user terminal, which requests the multimedia contents.

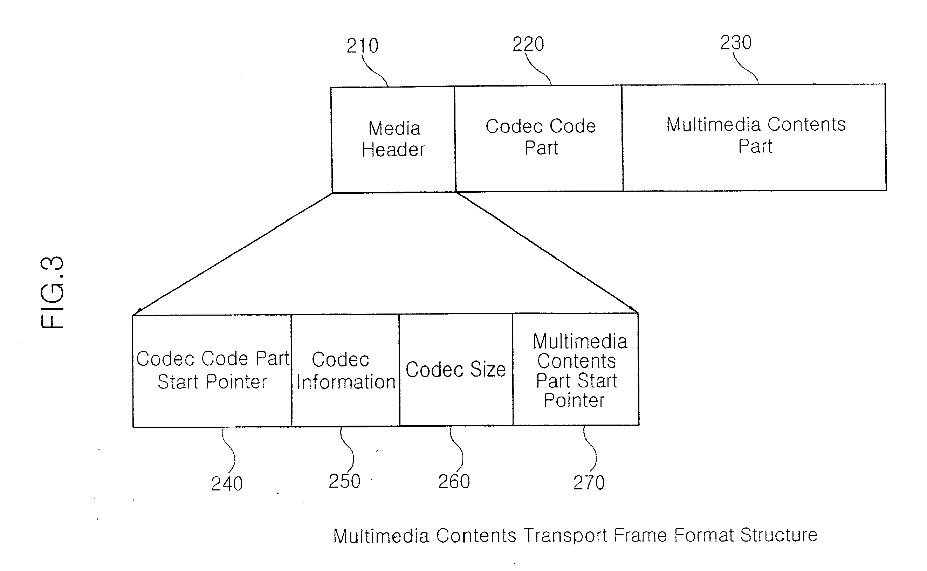

The media server 140 receives a profile from the open codec player 150 of the user terminal. At this time, when the open codec player 150 of the user terminal does not have a codec for decoding the multimedia contents, the media server 140 inserts the multimedia contents and the decoding codec in a transmission frame shown in FIG. 3 together, and transmits the transmission frame to the open codec player 150 of the user terminal. In addition, the media server 140 receives contents request information from the open codec player 150 and transmits the requested multimedia contents to the open codec player 150.

The encoder 110 and the media server 140 are logically separated from each other, but they may be physically incorporated in a single body.

The open codec player 150 stores the codecs, which are downloaded from the media server 140 together with the multimedia contents, in the open codec database 160. When the multimedia contents require a specific codec, the open codec player 150 dynamically loads the specific codec from the open codec database 160 and executes the loaded codec.

When the specific codec for decoding the multimedia contents does not exist in the open codec database 160, the open codec player 150 of the user terminal transmits, to the media server 140, profile information indicating that the specific codec does not exist.

When receiving the multimedia contents, the open codec player 150 analyzes a contents package, separates a codec part and a multimedia contents part from each other, and stores the codec in the open codec database 160. In addition, the open codec player 150 also stores the multimedia contents in a separate contents storage space. When the contents is streaming contents, the open codec player 150 receives the contents with a streaming buffer, and decodes and displays the contents in real time using the downloaded codec.

The open codec player 150 updates codec information about the codec stored in the open codec database 160, and when the specific codec is requested to play the multimedia contents, loads and uses the codec from the open codec database 160.

The open codec database 160 stores and manages various codecs, such as MPEG-2, MPEG-4, DIVX, XVID, WMV, and H.264, including the new codec transmitted from the media server 140, all of which are required for executing multimedia contents in the open codec player 150.

Referring to FIG. 2, when the open codec player 150 of the user terminal requests and tries to download desired multimedia contents, the media server 140 transmits profile information about a codec for decoding multimedia contents to the open codec player 150 of the user terminal, and determines whether or not the decoding codec exists in the user terminal.

When the codec for decoding requested multimedia contents does not exist in the user terminal, the open codec player 150 transmits profile information to the media server 140 such that the media server 140 transmits the corresponding codec together with the multimedia contents.

When the corresponding codec exists in the open codec player 150 of the user terminal, the open codec player 150 requests the media server 140 to only transmit the multimedia contents, excluding the codec.

When the multimedia contents is downloaded, the multimedia contents requested by the open codec player 150 of the user terminal may exist or not exist in the contents server 130.

When the multimedia contents requested by the open codec player 150 of the user terminal exists in the contents server 130, the media server 140 converts the format of the multimedia contents from the video camera 100 through the encoder 110 using a codec defined according to the policy of the service provider or compresses the multimedia contents.

Since the codec pool 120 of the service provider stores the corresponding codec, the codec is dynamically loaded when the encoder 110 requests. The encoder 110 encodes the multimedia contents by the codec loaded from the codec pool 120.

The media server 140 receives the profile information from the user terminal, when the corresponding codec does not exist in the open codec player 150 of the user terminal, packages the encoded multimedia contents together with the decoding codec into the transmission frame, and transmits the transmission frame to the open codec player 150 of the user terminal.

When the multimedia contents requested by the open codec player 150 of the user terminal does not exist in the contents server 130, the media server 140 requests the encoder 110 to provide the multimedia contents. The encoder 110 encodes the multimedia source in real time and transmits the encoded multimedia source to the media server 140.

FIG. 3 is a diagram showing the structure of a transmission frame of multimedia contents when contents is transmitted as a package according to an embodiment of the invention.

The transmission frame of the multimedia contents is composed of a media header 210, a codec code part 220, and a multimedia contents part 230.

The media header 210 is header information of the transmission frame that is used when the media server 140 transmits the multimedia contents requested by the open codec player 150.

The codec code part 220 is an area into which a codec to be executed by the open codec player 150 of the user terminal is inserted. For example, when the terminal has an Arm-type CPU and a Linux operating system, a Linux codec that is executable on the Arm CPU is put in the codec code part 220.

When the codec for decoding the multimedia contents requested by the open codec player 150 of the user terminal does not exist, the media server 140 inserts the codec for decoding the multimedia contents into the codec code part 220 and puts the multimedia contents in the multimedia contents part 230 according to the structure of the transmission frame of the contents package shown in FIG. 3. Then, the media server 140 transmits the transmission frame to the open codec player 150 of the user terminal.

The multimedia contents part 230 is an area in which the multimedia contents to be executed by the open codec player 150 is put.

The media header 210 is composed of a codec code part start pointer 240, codec information 250, a total codec size 260, and a multimedia contents part start pointer 270.

The codec code part start pointer 240 is given on a byte basis, and indicates a start point in which the codec is to be put.

The codec information 250 includes general information about a codec, such as a codec name, a codec owner, a codec version, and a CPU and an operating system, on which the corresponding codec is executable.

The codec size 260 is given on a byte basis, and indicates the actual size of the codec put in the transmission frame.

The multimedia contents part start pointer 270 is given on a byte basis, and indicates a start point from which the multimedia contents is put in the transmission frame.

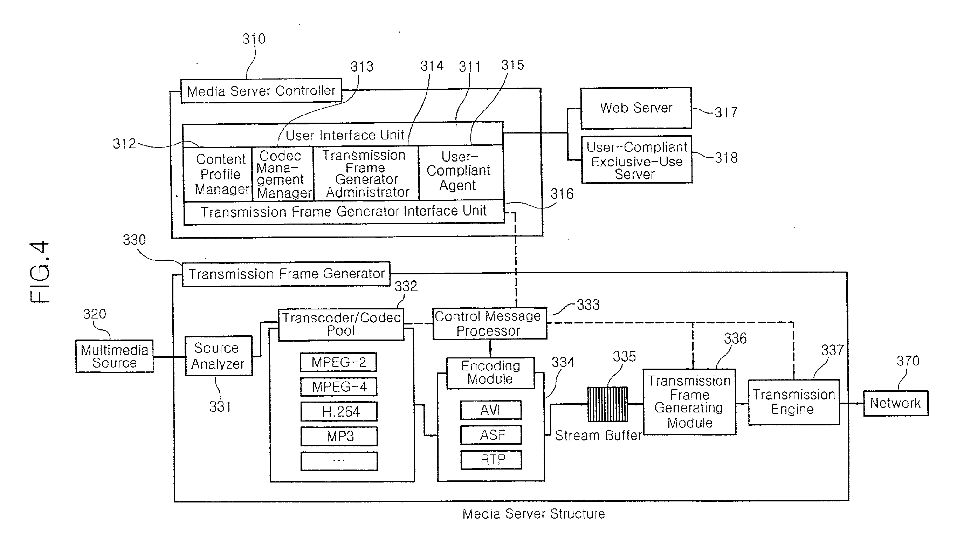

FIG. 4 is a diagram showing the configuration of an adaptive multimedia system for providing multimedia contents and a codec to a user terminal according to an embodiment of the invention.

The media server 140 according to the embodiment of the invention includes a media server controller 310 and at least one transmission frame generator 330.

The media server controller 310 includes a user interface unit 311, a contents profile manager 312, a codec management manager 313, a transmission frame generator administrator 314, a user-compliant agent 315, and a transmission frame generator interface unit 316.

The media server controller 310 sets and controls jobs that are to be executed in the transmission frame generator 330.

The media server controller 310 manages a contents profile and a codec pool for encoding. The media server controller 310 receives the profile information from the open codec player 150 of the user terminal, and when the corresponding codec does not exist in the open codec player 150 of the user terminal, transmits a control message to the transmission frame generator 330 such that the transmission frame generator 330 transmits the transmission frame including the multimedia contents and the decoding codec together. That is, the media server controller 310 transmits a media processing instruction and the control message to the transmission frame generator 330.

A plurality of transmission frame generators 330 are connected to the media server controller 310 and physically distributed. Each of the transmission frame generators 330 generates and transmits the transmission frame per session in response to a request to transmit multimedia contents from the terminal.

The user interface unit 311 provides a graphic interface that allows an administrator to manage and control a server, and is in connection with an external Web server 317 or a user-compliant exclusive-use server 318.

The contents profile manager 312 stores and manages standardized profile information including the formats of multimedia contents and media features (for example, media formats, such as AVI and MPEG, information about an A/V codec used in the media, and a media bandwidth). The contents profile manager 312 manages the profile information about contents, such as a compression codec name of multimedia contents, a codec version, a resolution, a frame rate, and a contents transmission bandwidth. The contents profile manager 312 transmits the profile information to the Web server 317 or the user-compliant exclusive-use server 318 through the user-compliant agent 315, to thereby inform general information about contents in the open codec player 150 of the user terminal.

The codec management manager 313 manages a media codec pool for encoding, and also manages a codec type, codec version information, license information, and location information.

The codec management manager 313 provides location information about a codec to be used inside or outside the system to a transcoder 332 including a codec pool of the transmission frame generator 330, which encodes the multimedia source. The transcoder 332 including the codec pool encodes or transcodes the multimedia source 320 as the media server controller 310 requests.

The transmission frame generator administrator 314 transmits the control message and the media processing instruction to a control message processor 333, such that optimum multimedia contents can be provided on the basis of the received profile information.

The media processing instruction includes a user terminal resolution, a terminal network bandwidth, a CPU-processable frame rate, and optimum media information for allowing the user terminal to execute multimedia contents. The media processing instruction allows the media to be converted by the transcoder 332 including the codec pool. Simultaneously, when receiving the media processing instruction, an encoding module 334 synchronizes and stores media (video, audio, or text) compressed by the transcoder 332 in a streaming format such that the player of the terminal can execute the media. If the user terminal does not have a codec for decoding the transcoded media, a transmission frame generating module 336 generates a transmission frame including multimedia contents and a decoding codec.

The user-compliant agent 315 grasps meta information about the multimedia contents (contents formats and media features (media formats, such as AVI and MPEG, A/V codec information, and the media bandwidth)) in connection with the Web server 317 or the user-compliant exclusive-use server 318, and visually outputs the standardized profile information. In addition, the user-compliant agent 315 receives a request to transmit specific contents from the user terminal, which selects the standardized profile information, receives the profile information from the user terminal, and stores the received profile information in the separate storage space.

The transmission frame generator interface unit 316 transmits the control message, which is transmitted from the transmission frame generator administrator 314, to the transmission frame generator 330 so as to reconstruct the multimedia contents requested by the user terminal to the structure of the transmission frame shown in FIG. 3.

The media server controller 310 is connected to a plurality of transmission frame generators 330 to construct a distributed system. The media server controller 310 is connected to the transmission frame generators 330 through logical interfaces such that the transmission frame generators 330, which have the same media transmission function but are distributed, can be controlled at one time. The plurality of transmission frame generators 330 are implemented with a common library, and are connected to the transmission frame generator administrator 314 of the media server controller 310.

The Web server 317 is a general Internet Web server, such as an Apache Web server or an IIS server, and functions as an interface between the user terminal and the media server controller 310.

When it is difficult to use the Web server 317 or when the user wants to construct an independent exclusive-use system, instead of the Web server 317, the user-compliant exclusive-use server 318 may be separately implemented in the enterprise network to function as an interface between the user terminal and the media server controller 310.

The transmission frame generator 330 includes a source analyzer 331, the transcoder 332 including the codec pool, the control message processor 333, the encoding module 334, a stream buffer 335, the transmission frame generating module 336, and a transmission engine 337.

The transmission frame generator 330 is logically a single module, but it may physically include a plurality of distributed transmission frame generators 330.

The transmission frame generator 330 recompresses the multimedia source, which is transmitted from the source analyzer 331, with the transcoder 332 according to the control message, which is transmitted from the media server controller 310 to the control message processor 333. In addition, the transmission frame generator 330 encodes the recompressed multimedia source with the encoding module 334 according to the streaming format, and stores the encoded multimedia source in the stream buffer 335. Then, the transmission frame generator 330 generates the transmission frame including the multimedia contents and the decoding codec with the transmission frame generating module 336, and transmits the transmission frame to the user terminal through the transmission engine 337.

When the open codec player 150 of the user terminal has the corresponding codec or an existing multimedia player is used, the transmission frame generator 330 transmits an existing multimedia transmission frame as it is without changing the structure of the transmission frame shown in FIG. 3.

When the transmission method according to the invention is not used, the open codec player 150 of the user terminal is compatible with the existing multimedia player.

The transmission frame generator 330 transmits the transmission frame including the multimedia contents to a wireless/wired network 370 according to the control message from the media server controller 310.

The source analyzer 331 analyzes video, audio, and text of the original multimedia source 320, and individually inputs video, audio, and text to the transcoder 332 including the codec pool. The multimedia source 320 may be video from a program provider or captured video (for example, DVI format).

The control message processor 333 provides a communication interface for processing the control message about the transmission frame generator 330, which is transmitted from the transmission frame generator administrator 314.

The control message processor 333 transmits the media processing instruction and the control message, which are transmitted from the transmission frame generator interface unit 316 of the media server controller 310, to the transcoder 332 including the codec pool and the encoding module 334, respectively.

The transcoder 332 including the codec pool transcodes or encodes the multimedia source 320 transmitted from the source analyzer 331 with a compression algorithm according to the media processing instruction and the control message transmitted from the control message processor 333.

The transcoder 332 including the codec pool changes the compression method by the compression algorithm (MPEG2, MPEG4, MPEG7, DIVX, XVID, WMV, or H.264) based on the contents request from the user terminal and the profile information to compress the multimedia source 320. In addition, when transcoding is not performed, encoding is performed with a default compression algorithm (for example, DIVX).

The encoding module 334 encodes video, audio, and text to the transmission frame of multimedia contents, such as AVI, ASF, or MPEG2-TS, while synchronizing video, audio, and text, reconstructs a streaming format (AVI, ASF, or RTP) to determine a point as the criterion of media control (play, stop, pause, fast forward, or rewind) according to the terminal environment, and stores the transmission frame, which is encoded in real time, in the stream buffer 335.

The stream buffer 335 receives the transmission frame of multimedia contents, which is converted into the streaming format, from the encoding module 334, and temporarily stores the transmission frame in a buffer area.

When the open codec player 150 of the user terminal does not have a decoding codec, the transmission frame generating module 336 transmits a transmission frame including the multimedia contents and the decoding codec to the transmission engine 337.

The transmission engine 337 accesses to the user terminal and transmits the transmission frame including the requested multimedia contents and the decoding codec to the user terminal through the network 370 by a point-to-point method and a point-to-multipoint method (multicast and broadcast).

The network 370 includes various wired (xDSL) and wireless networks (WLAN, CDMA, HSDPA, HSUPA, WiBro, or 4G Network).

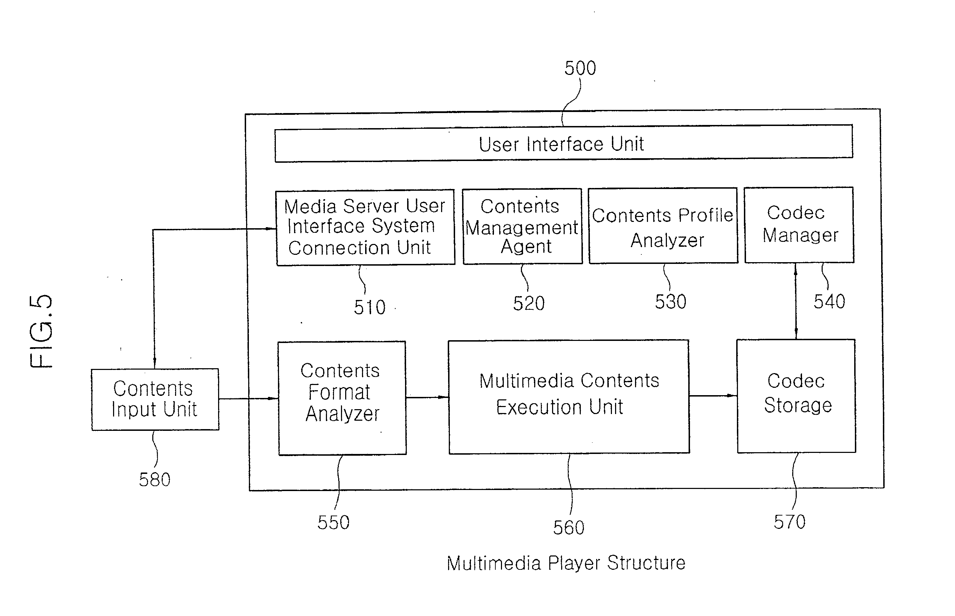

FIG. 5 is a diagram showing the configuration of a multimedia player according to an embodiment of the invention.

The multimedia player includes a user interface unit 500, a media server user interface system connection unit 510, a contents management agent 520, a contents profile analyzer 530, a codec manager 540, a contents format analyzer 550, a multimedia contents execution unit 560, a codec storage 570, and a contents input unit 580.

The multimedia player according to the embodiment of the invention has a functional difference from the existing multimedia players. The existing multimedia player only functions as the multimedia contents execution unit 560 among the constituent elements of the multimedia player according to the embodiment of the invention.

The user interface unit 500 provides a user interface that allows the user to control the multimedia player, or to play multimedia contents.

The media server user interface system connection unit 510 receives profile information of multimedia contents selected by the user-compliant system of the media server 140 (the Web server 317 or the user-compliant exclusive-use server 318).

When the user-compliant system is the Web server, the media server user interface system connection unit 510 accesses the user-compliant system through the HTTP protocol. When the user-compliant exclusive-use server 318 is used, the media server user interface system connection unit 510 defines a separate protocol to acquire the profile information of the multimedia contents from the transmission frame generator 330.

The contents management agent 520 receives the profile information of the multimedia contents selected by the user through the media server user interface system connection unit 510 in connection with the user-compliant system (the Web server or the user-compliant exclusive-use server). The contents management agent 520 has a multimedia contents analysis function and an internal codec management function.

The contents management agent 520 transmits the profile information of the multimedia contents to the contents profile analyzer 530. The contents profile analyzer 530 extracts a profile, determines whether or not a codec according to the profile exists in the open codec player 150 of the user terminal, and inquires of the codec manager 540 whether or not a streaming format is supported.

When the user terminal does not support a codec for decoding the multimedia contents, the contents management agent 520 transmits, to the user-compliant agent 315 of the media server controller 310, profile information indicating that the decoding codec does not exist, and requests the media server controller 310 to transmit a transmission frame including the codec for decoding the multimedia contents shown in FIG. 3.

When the streaming formats and the parameters required to execute various kinds of media are not satisfied, the open codec player 150 transmits the profile information to the media server controller 310 and requests the conversion of the multimedia contents. Then, the transcoder 332 and the encoding module 334 transcode the multimedia contents in an executable format according to the control message of the media server controller 310.

The contents profile analyzer 530 extracts the contents profile information transmitted from the contents management agent 520, and analyzes whether or not a codec according to the profile information of the open codec player 150 in the user terminal exists. The contents profile information includes the streaming format, the compression algorithm, and resolution information of the corresponding contents.

As the contents management agent 520 requests, the codec manager 540 checks whether or not the codec used to compress the multimedia contents exists in the user terminal, extracts a codec (decoder) parsed by the contents format analyzer 550, and stores the extracted codec in the codec storage 570.

The contents format analyzer 550 receives the transmission frame including the multimedia contents and the codec from the transmission frame generator 330, separates the multimedia contents from the codec, and transmits the separated multimedia contents to the multimedia contents execution unit 560.

The multimedia contents execution unit 560 parses the format of the multimedia contents to extracts media (video, audio, and text), and plays and displays the extracted media.

The codec storage 570 is an area where the codec to be used by the multimedia contents execution unit 560 is stored. A codec is newly stored and added, or deleted by the codec manager 540.

The contents input unit 580 receives the multimedia contents to be executed by the open codec player 150 in connection with the transmission engine 337 of the transmission frame generator 330.

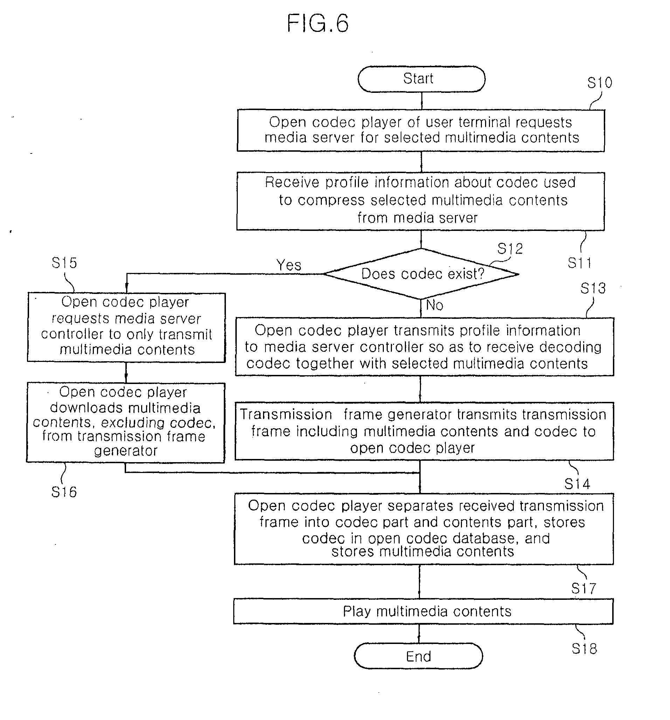

FIG. 6 is a flowchart illustrating an adaptive multimedia providing method for a terminal not having a multimedia codec according to an embodiment of the invention.

The open codec player 150 of the user terminal requests the media server controller 310 for selected multimedia contents (Step S10), receives profile information about a codec used to compress the selected multimedia contents from the media server controller 310 (Step S11), and determines whether or not the corresponding codec exists in the user terminal (Step S12) .

When a codec for decoding the multimedia contents does not exist in the open codec player 150 of the user terminal, the open codec player 150 transmits profile information to the media server controller 310 so as to receive the corresponding codec together with the multimedia contents (Step S13), and downloads a transmission frame including the multimedia contents and the decoding codec from the transmission frame generator 330 according to the control message of the media server controller 310 (Step S14).

When the codec exists in the open codec player 150 of the user terminal, the open codec player 150 transmits the contents profile information to the media server controller 310 and requests to only transmit the multimedia contents, excluding the codec (Step S15). Then, the open codec player 150 only receives the multimedia cotents, excluding the codec, from the transmission frame generator 330, which is connected to the media server controller 310 (Step S16).

When the transmission frame including the requested multimedia contents and the decoding codec is received, the open codec player 150 of the user terminal analyzes the contents package (the corresponding codec together with multimedia contents), separates the received transmission frame into the codec part and the contents part, stores the codec in the open codec database 160, and stores the multimedia contents in a separate contents storage space (Step S17). When the contents is streaming contents, the open codec player 150 transmits the contents to the stream buffer 335, and decodes and displays the contents using the downloaded codec in real time (Step S18).

The open codec player 150 of the user terminal updates the codec information about the codec stored in the open codec database 160, and when the same codec is subsequently requested, loads and uses the codec from the open codec database 160.

Consequently, when the profile information is transmitted from the open codec player 150 of the user terminal and the codec for decoding the multimedia contents does not exist in the user terminal, the transmission frame including the multimedia contents and the decoding codec is transmitted from the transmission frame generator 330 to the open codec player 150 according to the control message of the media server controller 310.

Therefore, when the codec for decoding the multimedia contents does not exist in the open codec player of the user terminal, the adaptive multimedia system allows the transmission frame including the necessary codec together with the multimedia contents to the open codec player of the user terminal.

Although the invention has been described in connection with the preferred embodiments, various modifications or changes may be made by those skilled in the art without departing from the scope of the invention defined by the appended claims.

## Claims

1. An adoptive multimedia system that provides multimedia contents and a codec to a user terminal, -the adaptive multimedia system comprising:
a media server controller (310) that receives profile information from an open codec player (150) of the user terminal, and when a decoding codec of the multimedia contents does not exist in the user terminal, transmits a control message to allow the multimedia contents and the decoding codec to be transmitted together; and
at least one transmission frame generator (330) that encodes the multimedia contents according to the control message transmitted from the media server controller (310), generates a transmission frame including the encoded multimedia contents and the decoding codec, and transmits the generated transmission frame to the open codec player (150).

2. The adaptive multimedia system of claim 1,
wherein the media server controller (310) includes:
a contents profile manager (312) that manages the profile information including media formats and features of the multimedia contents;
a codec management manager (313) that manages a codec pool; and
a transmission frame generator administrator (314) that, when the decoding codec of the multimedia contents does not exist in the user terminal according to the profile information from the user terminal, transmits the control message to allow the multimedia contents and the decoding codec to be transmitted together.

3. The adaptive multimedia system of claim 1 or 2, wherein the transmission frame generator (330) includes:
a control message processor (333) that receives the control message from a transmission frame generator administrator (314) of the media server controller (310) and processes the received control message;
a transcoder (332) that includes a codec pool to encode or transcode a multimedia contents with a compression algorithm according to the control message from the control message processor (333);
an encoding module (334) that encodes the multimedia contents while synchronizing medina; and
a transmission frame generating module (336) that generates a transmission frame including the multimedia contents transmitted from the encoding module and the decoding codec.

4. The adaptive multimedia system of claim 3,
wherein the transcoder (332) including the codec pool changes a compression method by a compression algorithm based on the contents request and the profile information from the user terminal and encodes the multimedia contents, or when transcoding is impossible, the multimedia contents with a default compression algorithm.

5. The adaptive multimedia system of one of claims 1 to 4,
wherein the profile information includes at least one of a compression codec name, codec information, a codec version, a resolution, a frame rate, and a contents transmission bandwidth.

6. An open codec player (150) of a user terminal, comprising:
a user interface unit (500) that plays multimedia contents;
a media server user interface system connection unit (510) that receives profile information of selected multimedia contents from the user terminal;
a contents profile analyzer (530) that extracts the contents profile information and analyzes whether or not a codec corresponding to the profile information exists in the user terminal;
a contents format analyzer (550) that receives a transmission frame including multimedia contents and a decoding codec transmitted from a multimedia system, and separates the decoding codec from the multimedia contents; and
a multimedia contents execution unit (560) that parses the format of the multimedia contents transmitted from the contents format analyzer (550), and extracts and plays media.

7. The open codec player (150) of claim 6, further comprising:
a codec storage (570) that stores a codec to be used; and
a codec manager (540) that extracts a parsed codec, and performs storage, addition, and deletion of the extracted codec with respect to the codec storage (570).

8. The open codec player (150) of claim 6 or 7, further comprising:
an open codec database that stores the multimedia contents and the decoding codec transmitted from the multimedia system,
wherein, in case of multimedia, contents that requires a specific codec, the corresponding codec is loaded from the open codec database and executed.

9. The open codec player (150) of claim 8,
wherein, when a codec does not exist in the open codec database, profile information indicating that a specific codec does not exist is transmitted to a media server controller (310).

10. The open codec player (150) of claim 6,
wherein the transmission frame including the multimedia contents and the decoding codec is composed of:
a media header that includes header information of the transmission frame;
a codec code part in which the decoding codec is put; and
a multimedia contents part in which the multimedia contents is put.

11. An adaptive multimedia providing method for a terminal not having a multimedia codec, the method comprising the steps of:
(a) causing an open codec player of a user terminal to request a media server controller for selected multimedia contents (S10);
(b) receiving profile informations about a codec for decoding the multimedia contents from a multimedia, system and determining whether or not the decoding codec exists-in the user terminal (S11);
(c) when the decoding codec does not exist in the user terminal (S12), transmitting profile information about the codec so as for the open codec player to receive the decoding codec from the media server controller, together with the selected multimedia contents (S13); and
(d) receiving a transmission frame including the requested multimedia contents and decoding codec from a transmission frame generator (S14).

12. The method of claim 11, further comprising a step of :
(e) if it is determined in the step (b) that the codec exists in the user terminal, transmits profile information so as to only receive the multimedia contents, excludina the codec (S15).

13. The method of claim 11 or 12, further comprising a step of:
(f) if the open codec player of the user terminal receives the transmission frame of the contents, separating the transmission frame into a codec part and a contents part, storing the codec in an open codec database, storing the multimedia contents in a separate contents storage space, and decoding the multimedia contents (S17).

## Patentansprüche

1. Adaptives Multimediasystem, welches Multimediainhalt und einen Codec an ein Nutzerendgerät bereitstellt, wobei das adaptive Multimediasystem umfasst:
eine Medienserversteuereinheit (310), welche Profilinformation von einem Abspieler mit offenem Codec (150) des Nutzerendgeräts empfängt und, wenn ein Codec zur Decodierung des Multimediainhalts in dem Nutzerendgerät nicht vorhanden ist, eine Steuernachricht überträgt, um zu ermöglichen, dass der Multimediainhalt und der Codec zur Decodierung zusammen übertragen werden; und
wenigstens einen Übertragungsrahmengenerator (330), welcher den Multimediainhalt in Übereinstimmung mit der von der Medienserversteuereinheit (310) gesendeten Steuernachricht codiert, einen Übertragungsrahmen erzeugt, der den codierten Multimediainhalt und den Codec zur Decodierung enthält, und den erzeugten Übertragungsrahmen an den Abspieler mit offenem Codec (150) überträgt.

2. Adaptives Multimediasystem nach Anspruch 1,
wobei die Medienserversteuereinheit (310) enthält:
einen Inhaltsprofilmanager (312), welcher die Profilinformation verwaltet, die Medienformate und Merkmale des Multimediainhalts enthält;
einen Codecverwaltungsmanager (313), welcher eine Codecsammlung verwaltet; und
einen Übertragungsrahmengenerator-Administrator (314), welcher, wenn ein Codec zur Decodierung des Multimediainhalts in dem Nutzerendgerät in Übereinstimmung mit der Profilinformation von dem Nutzerendgerät nicht vorhanden ist, die Steuernachricht überträgt, um zu ermöglichen, dass der Multimediainhalt und der Codec zur Decodierung zusammen übertragen werden.

3. Adaptives Multimediasystem nach Anspruch 1 oder 2,
wobei der Übertragungsrahmengenerator (330) enthält:
einen Steuernachrichtprozessor (333), welcher die Steuernachricht von einem Übertragungsrahmengenerator-Administrator (314) der Medienserversteuereinheit (310) empfängt und die empfangene Steuernachricht verarbeitet;
einen Transcoder (332), welcher eine Codecsammlung enthält, um einen Multimediainhalt mit einem Kompressionsalgorithmus in Übereinstimmung mit der Steuernachricht von dem Steuernachrichtprozessor (333) zu codieren oder zu transcodieren;
ein Codierungsmodul (334), welches den Multimediainhalt codiert, während Medien synchronisiert werden; und
ein Übertragungsrahmenerzeugungsmodul (336), welches einen Übertragungsrahmen erzeugt, der von dem Codierungsmodul übertragenen Multimediainhalt und den Codec zur Decodierung enthält.

4. Adaptives Multimediasystem nach Anspruch 3,
wobei der Transcoder (332), welcher die Codecsammlung enthält, ein Kompressionsverfahren durch einen Kompressionsalgorithmus basierend auf der Inhaltsanforderung und der Profilinformation von dem Nutzerendgerät ändert und den Multimediainhalt codiert, oder, wenn Transcodieren unmöglich ist, den Multimediainhalt mit einem standardmäßigen Kompressionsalgorithmus codiert.

5. Adaptives Multimediasystem nach einem der Ansprüche 1 bis 4,
wobei die Profilinformation einen Kompressionscodecname, Codecinformation, eine Codecversion, eine Auflösung, eine Rahmenrate und/oder eine Inhaltsübertragungsbandbreite enthält.

6. Abspieler mit offenem Codec (150) eines Nutzerendgeräts, umfassend:
eine Nutzerschnittstelleneinheit (500), welche Multimediainhalt abspielt;
eine Medienservernutzerschnittstellensystemverbindungseinheit (510), welche Profilinformation von ausgewähltem Multimediainhalt von dem Nutzerendgerät empfängt;
eine Inhaltsprofilanalyseeinheit (530), welche die Inhaltsprofilinformation extrahiert und analysiert, ob ein Codec entsprechend der Profilinformation in dem Nutzerendgerät vorhanden ist oder nicht;
eine Inhaltsformatanalyseeinheit (550), welche einen von einem Multimediasystem übertragenen Übertragungsrahmen, der Multimediainhalt und einen Codec zur Decodierung enthält, empfängt und den Codec zur Decodierung von dem Multimediainhalt trennt; und
eine Multimediainhaltsausführungseinheit (560), welche das von der Inhaltsformationsanalyseeinheit (550) übertragene Format des Multimediainhalts parst und Medien extrahiert und abspielt.

7. Abspieler mit offenem Codec (150) nach Anspruch 6, ferner umfassend:
einen Codecspeicher (570), welcher einen zu verwendenden Codec speichert; und
einen Codecmanager (540), welcher einen geparsten Codec extrahiert und Speicherung, Ergänzung und Löschung des extrahierten Codecs mit Bezug auf den Codecspeicher (570) durchführt.

8. Abspieler mit offenem Codec (150) nach Anspruch 6 oder 7, ferner umfassend:
eine Datenbank offener Codecs, welche den Multimediainhalt und den Codec zur Decodierung speichert, die von dem Multimediasystem übertragen sind,
wobei im Falle von Multimediainhalt, der einen bestimmten Codec erfordert, der entsprechende Codec aus der Datenbank offener Codecs geladen und ausgeführt wird.

9. Abspieler mit offenem Codec (150) nach Anspruch 8,
wobei, wenn ein Codec in der Datenbank offener Codecs nicht vorhanden ist, Profilinformation, welche angibt, dass ein bestimmter Codec nicht vorhanden ist, an eine Medienserversteuereinheit (310) übertragen wird.

10. Abspieler mit offenem Codec (115) nach Anspruch 6,
wobei der Übertragungsrahmen, welcher den Multimediainhalt und den Codec zur Decodierung enthält, zusammengesetzt ist aus:
einem Medienkopf, welcher Kopfinformation des Übertragungsrahmens enthält;
einem Codec-Codeteil, in welchem der Codec zur Decodierung abgelegt ist; und
einem Multimediainhaltsteil, in welchem der Multimediainhalt abgelegt ist.

11. Adaptives Multimediabereitstellungsverfahren für ein Endgerät, welches einen Multimediacodec nicht aufweist, wobei das Verfahren die Schritte umfasst:
(a) Bewirken, dass ein Abspieler mit offenem Codec eines Nutzerendgeräts eine Medienserversteuereinheit nach ausgewähltem Multimediainhalt anfragt (S10);
(b) Empfangen von Profilinformation über einen Codec zum Decodieren des Multimediainhalts von einem Multimediasystem und Bestimmen, ob der Codec zur Decodierung in dem Nutzerendgerät existiert oder nicht (S11);
(c) falls der Codec zur Decodierung in dem Nutzerendgerät nicht vorhanden ist (S12), Übertragen von Profilinformation über den Codec derart, dass der Abspieler mit offenem Codec den Codec zur Decodierung zusammen mit dem ausgewählten Multimediainhalt von der Medienserversteuereinheit empfängt (S13); und
(d) Empfangen eines Übertragungsrahmens, welcher den angeforderten Multimediainhalt und Codec zur Decodierung enthält, von einem Übertragungsrahmenerzeuger (S14).

12. Verfahren nach Anspruch 11, ferner umfassend einen Schritt:
(e) falls es in Schritt (b) bestimmt wird, dass der Codec in dem Nutzerendgerät vorhanden ist, Übertragen von Profilinformation derart, dass ausschließlich der Multimediainhalt ohne den Codec empfangen wird (S15).

13. Verfahren nach Anspruch 11 oder 12, ferner umfassend einen Schritt:
(f) falls der Abspieler mit offenem Codec des Nutzerendgeräts den Übertragungsrahmen des Inhalts empfängt, Trennen des Übertragungsrahmens in einen Codecteil und einen Inhaltsteil, Speichern des Codecs in einer Datenbank offener Codecs, Speichern des Multimediainhalts in einem separaten Inhaltsspeicherraum und Decodieren des Multimediainhalts (S17).

## Revendications

1. Système multimédia adaptatif qui fournit du contenu multimédia et un codec à un terminal d'utilisateur, le système multimédia adaptatif comprenant :
un contrôleur de serveur média (310) qui reçoit des informations de profil à partir d'un lecteur à codec libre (150) du terminal d'utilisateur et, quand un codec de décodage du contenu multimédia n'existe pas dans le terminal d'utilisateur, transmet un message de commande pour permettre au contenu multimédia et au codec de décodage d'être transmis conjointement ; et
au moins un générateur de trame de transmission (330) qui code le contenu multimédia en fonction du message de commande transmis à partir du contrôleur de serveur média (310), génère une trame de transmission comprenant le contenu multimédia codé et le codec de décodage et transmet la trame de transmission générée au lecteur à codec libre (150).

2. Système multimédia adaptatif selon la revendication 1,
dans lequel le contrôleur de serveur média (310) comprend :
un gestionnaire de profil de contenu (312) qui gère les informations de profil comprenant des formats de support et des caractéristiques du contenu multimédia ;
un gestionnaire de gestion de codec (313) qui gère un pool de codec ; et
un administrateur de générateur de trame de transmission (314) qui, quand le codec de décodage du contenu multimédia n'existe pas dans le terminal d'utilisateur selon les informations de profil provenant du terminal d'utilisateur, transmet le message de commande pour permettre au contenu multimédia et au codec de décodage d'être transmis conjointement.

3. Système multimédia adaptatif selon la revendication 1 ou 2,
dans lequel le générateur de trame de transmission (330) comprend :
un processeur de message de commande (333) qui reçoit le message de commande à partir d'un administrateur de générateur de trame de transmission (314) du contrôleur de serveur média (310) et traite le message de commande reçu ;
un transcodeur (332) qui comprend un pool de codec pour coder ou transcoder un contenu multimédia avec un algorithme de compression en fonction du message de commande provenant du processeur de message de commande (333) ;
un module de codage (334) qui code le contenu multimédia tout en synchronisant les médias ; et
un module de génération de trame de transmission (336) qui génère une trame de transmission comprenant le contenu multimédia transmis à partir du module de codage et le codec de décodage.

4. Système multimédia adaptatif selon la revendication 3,
dans lequel le transcodeur (332) comprenant le pool de codec remplace un procédé de compression par un algorithme de compression sur la base de la demande de contenu et des informations de profil provenant du terminal d'utilisateur et code le contenu multimédia ou, quand un transcodage est impossible, le contenu multimédia avec un algorithme de compression par défaut.

5. Système multimédia adaptatif selon une des revendications 1 à 4,
dans lequel les informations de profil comprennent au moins un parmi un nom de codec de compression, des informations de codec, une version de codec, une résolution, un débit de trame et une largeur de bande de transmission de contenu.

6. Lecteur à codec libre (150) d'un terminal d'utilisateur, comprenant :
une unité d'interface utilisateur (500) qui reproduit du contenu multimédia ;
une unité de connexion de système d'interface utilisateur de serveur média (510) qui reçoit des informations de profil de contenu multimédia sélectionné à partir du terminal d'utilisateur ;
un analyseur de profil de contenu (530) qui extrait les informations de profil de contenu et analyse le fait qu'un codec correspondant aux informations de profil existe ou non dans le terminal d'utilisateur ;
un analyseur de format de contenu (550) qui reçoit une trame de transmission comprenant du contenu multimédia et un codec de décodage transmis à partir d'un système multimédia et sépare le codec de décodage du contenu multimédia ; et
une unité d'exécution de contenu multimédia (560) qui effectue une analyse du format du contenu multimédia transmis à partir de l'analyseur de format de contenu (550) et extrait et reproduit le multimédia.

7. Lecteur à codec libre (150) selon la revendication 6, comprenant en outre :
une mémoire de codec (570) qui stocke un codec à utiliser ; et
un gestionnaire de codec (540) qui extrait un codec soumis à une analyse et effectue le stockage, l'ajout et la suppression du codec extrait par rapport à la mémoire de codec (570).

8. Lecteur à codec libre (150) selon la revendication 6 ou 7, comprenant en outre :
une base de données de codec libre qui stocke le contenu multimédia et le codec de décodage transmis à partir du système multimédia,
dans lequel, dans le cas de contenu multimédia qui nécessite un codec spécifique, le codec correspondant est chargé à partir de la base de données de codec libre et exécuté.

9. Lecteur à codec libre (150) selon la revendication 8,
dans lequel, quand un codec n'existe dans la base de données de codec libre, des informations de profil indiquant qu'un codec spécifique n'existe pas sont transmises à un contrôleur de serveur média (310).

10. Lecteur à codec libre (150) selon la revendication 6,
dans lequel la trame de transmission comprenant le contenu multimédia et le codec de décodage est composée de :
un en-tête de média qui comprend des informations d'en-tête de la trame de transmission ;
une partie de code de codec dans laquelle le codec de décodage est placé ; et
une partie de contenu multimédia dans laquelle le contenu multimédia est placé.

11. Procédé de fourniture de multimédia adaptatif pour un terminal n'ayant pas un codec de multimédia, le procédé comprenant les étapes suivantes :
(a) la provocation d'une demande par un lecteur à codec libre d'un terminal d'utilisateur à un contrôleur de serveur média d'un contenu multimédia sélectionné (510) ;
(b) la réception d'informations de profil concernant un codec pour décoder le contenu multimédia en provenance d'un système multimédia et la détermination du fait que le codec de décodage existe ou non dans le terminal d'utilisateur (511) ;
(c) quand le codec de décodage n'existe pas dans le terminal d'utilisateur (512), la transmission d'informations de profil concernant le codec de manière que le lecteur à codec libre reçoive le codec de décodage à partir du contrôleur de serveur média, conjointement au contenu multimédia sélectionné (513) ; et
(d) la réception d'une trame de transmission comprenant le contenu multimédia demandé et le codec de décodage à partir d'un générateur de trame de transmission (514).

12. Procédé selon la revendication 11, comprenant en outre l'étape suivante :
(e) s'il est déterminé dans l'étape (b) que le codec existe dans le terminal d'utilisateur, la transmission d'informations de profil de manière à recevoir seulement le contenu multimédia, en excluant le codec (515).

13. Procédé selon la revendication 11 ou 12, comprenant en outre l'étape suivante :
(f) si le lecteur à codec libre du terminal d'utilisateur reçoit la trame de transmission du contenu, la séparation de la trame de transmission en une partie de codec et une partie de contenu, le stockage du codec dans une base de données de codec libre, le stockage du contenu multimédia dans un espace de stockage de contenu séparé, et le décodage du contenu multimédia (517).
